# EUROPÄISCHE PATENTSCHRIFT

(11) **EP 4 392 684 B1**
(45) Veröffentlichungstag und Bekanntmachung des Hinweises auf die Patenterteilung: **15.10.2025**
(21) Anmeldenummer: 22823498.5
(22) Anmeldetag: 30.11.2022
(51) Int. Cl.: F16C 33/20, C08K 7/14, F16C 17/10, F16C 11/02

(54) **GLEITLAGERVERBUNDWERKSTOFF UND GLEITLAGERANORDNUNG**
COMPOSITE MATERIAL FOR A SLIDING BEARING AND SLIDING BEARING ARRANGEMENT
MATÉRIAU COMPOSITE POUR PALIER LISSE ET AGENCEMENT DE PALIER LISSE

(30) Priorität: 14.12.2021 DE 102021133096
(43) Veröffentlichungstag der Anmeldung: 03.07.2024
(73) Patentinhaber: KS Gleitlager GmbH, 68789 St. Leon-Rot (DE)
(72) Erfinder: BICKLE, Rüdiger, 68799 Reilingen (DE); REINICKE, Rolf, 76669 Bad Schönborn (DE); KÜNTZLER, Boris, 76872 Steinweiler (DE)
(74) Vertreter: DREISS Patentanwälte PartG mbB
(86) Internationale Anmeldenummer: PCT/EP2022/083897
(87) Internationale Veröffentlichungsnummer: WO 2023/110406

(56) Entgegenhaltungen:
- US-A1- 2021 140 486

## Beschreibung

Die Erfindung betrifft einen Gleitlagerverbundwerkstoff mit einer metallischen Stützschicht, insbesondere aus Stahl, mit einer auf die Stützschicht entweder direkt oder unter Zwischenordnung einer Haftvermittlungsschicht aufgebrachten Gleitschicht aus einem Gleitschichtmaterial auf Polymerbasis mit Füllstoffen, wobei die Polymerbasis von PTFE gebildet ist. Ein Teil aus einem solchen Gleitlagerverbundwerkstoff ist bekannt aus US 2009/0180720 A1. Dabei ist das Gleitschichtmaterial auf PTFE Basis in ein Drahtgewebe eingebracht bzw. das Drahtgewebe in dem Gleitschichtmaterial vollständig aufgenommen.

Gleitlagerverbundwerkstoffe der hier in Rede stehenden Art finden in allgemeinhin bekannter Weise Verwendung zur Herstellung von Buchsen, Bundbuchsen oder Kreisscheiben oder Kreisringscheiben zur Herstellung von Gleitlageranordnungen, bei denen eine Gleitlagerbuchse eine hülsenförmige Aufnahme für einen darin verschwenkbaren Wellenabschnitt bildet. Seit jeher wird an der Verbesserung der Festigkeit und der tribologischen Eigenschaften der Gleitlagerverbundwerkstoffe gearbeitet. Hierbei kommt insbesondere bei PTFE als Polymerbasis des Gleitschichtmaterials den Füllstoffen oder einer Füllstoffkombination eine die Festigkeit und Belastbarkeit des Gleitlagerverbundwerkstoff erhöhende und optimierende Bedeutung zu. Hierbei werden mitunter metallische Füllstoffe und insbesondere auch Graphit und faserförmige Füllstoffe, wie Kohlenstofffasern, eingesetzt. Diese erhöhen naturgemäß die elektrische Leitfähigkeit des Gleitschichtmaterials und damit auch des gesamten Gleitlagerverbundwerkstoffs. US 5,616,406 offenbart einen Gleitlagerverbundwerkstoff, bei dem ein Gleitschichtmaterial in ein Streckmetallgitter oder Drahtgewebe eingebracht ist. Es umfasst 5-30 Gew.-% wenigstens eines verstärkenden Füllstoffs ausgewählt aus Glasfasern und Wollastonit, 1-15 Gew.-% wenigstens eines Phosphats, ausgewählt aus Calciumpyrophosphat und Calciumhydrogenphosphat, 1-20 Gew.-% Bariumsulfat und als Rest PTFE. Bei allen Ausführungsbeispielen ist entweder Glasfasern oder Wollastonit verwandt.

US 2009/0180720 A1 offenbart ein Schwenklagerteil mit einer Öffnung, in der eine Gleitlageranordnung aufgenommen ist, wobei die Gleitlageranordnung eine hülsenförmige Aufnahme und einen Wellenabschnitt umfasst, der in der hülsenförmigen in Aufnahme hin und her schwenkbar aufgenommen ist, so dass eine Schwenklagerstelle gebildet ist.

Der vorliegenden Erfindung liegt die Aufgabe zugrunde, einen Gleitlagerverbundwerkstoff anzugeben, der sich für die Herstellung einer Gleitlageranordnung aus einer hülsenförmigen Aufnahme aus einem auf Buchsenform gerollten Gleitlagerverbundwerkstoff und einem darin eingesetzten Wellenabschnitt, eignet, bei der die Gleitlageranordnung in ein elektrisch leitfähiges Lackbad zur Lackbeschichtung eingebracht wird.

Mit der vorliegenden Erfindung wird ein Gleitlagerverbundwerkstoff vorgeschlagen, der erfindungsgemäß dadurch gekennzeichnet ist, dass die Füllstoffe bezogen auf die Masse des Gleitschichtmaterials aus 10 - 25 Gew.-% Glasfasern und in Summe 5 - 15 Gew.-% Wollastonit und/oder Flugasche und gegebenenfalls bis zu 5 Gew.-% weiteren Füllstoffen gebildet sind und dass ein Verhältnis eines gewichtsprozentualen Anteils der Glasfasern zu einem gewichtsprozentualen Anteil des Wollastonits und/oder Flugasche zwischen 1:1 und 2:1 liegt, und dass eine flächenhafte quadratische Probe von 10,0 mm mal 10,0 mm Kantenlänge des Gleitlagerverbundwerkstoffs einen elektrischen Widerstand gemessen orthogonal zu seiner flächenhaften Erstreckung von wenigstens 10⁷ Ohm aufweist.

Die Anmelderin hat nämlich festgestellt, dass sich elektrisch leitfähige Füllstoffe in dem Gleitschichtmaterial insoweit als problematisch erweisen, als sich elektrisch leitfähige Lackpartikel an der axialen Stirnseite der hülsenförmigen Aufnahme und an dem darin eingesetzten Wellenabschnitt und auch im Spalt zwischen der hülsenförmigen Aufnahme und dem Wellenabschnitt ablagern und die Gleitlageranordnung stören und deren Betrieb beeinträchtigen können.

Es wird also erfindungsgemäß vorgeschlagen, dass als hauptsächliche Füllstoffe Glasfasern und Wollastonit und/oder Flugasche, und zwar vorzugsweise nadelförmiges Wollastonit, verwendet wird. Flugasche hat sich als ein ebenfalls und gleichermaßen brauchbarer Füllstoff im Zusammenwirken mit Glasfasern erwiesen. Glasfasern sind zwar in an sich bekannter Weise abrasiv, was sich im Hinblick auf eine Optimierung des Reibwerts eher nicht eignet, sie haben jedoch eine verstärkende Wirkung, welche sich bei PTFE als Polymerbasis des Gleitschichtmaterials als vorteilhaft erweist. Hiervon ausgehend ist eine Optimierung des Reibwerts eher nicht erforderlich. Glasfasern sind jedenfalls elektrisch weitestgehend nicht leitend. Der zusätzliche Füllstoff in Form von Wollastonit und/oder Flugasche erhöht ebenfalls die Festigkeit und Verschleißbeständigkeit des Gleitschichtmaterials und weist aber gleichzeitig ein günstiges Reibverhalten auf. Bei Zusatz dieser Füllstoffe, also Glasfasern und Wollastonit und/oder Flugasche, lässt sich ein Gleitschichtmaterial erreichen, welches weitestgehend elektrisch isolierend ist. Eine geringere Abrasivität von Wollastonit und/oder Flugasche gegenüber Glasfasern hat auch den Vorteil, dass die Standzeit von Schneid- und Umformwerkzeugen erhöht ist verglichen mit einem Gleitschichtmaterial, welches kein Wollastonit oder Flugasche aufweisen würde. Es kann so insgesamt eine verhältnismäßig hohe mechanische Belastbarkeit und hohe Verschleißfestigkeit einer Gleitschicht mit einem Gleitschichtmaterial, dessen Polymerbasis von PTFE gebildet ist, erreicht werden. Durch die weitestgehende elektrisch isolierende, also elektrisch nicht leitende, Gleitschicht lässt sich auch das von der Anmelderin erkannte Problem lösen, wonach es so weniger oder nicht mehr zu Ablagerungen von Lackpartikeln im Bereich der Stirnseiten der Gleitlageranordnung, d.h. im Bereich des Spalts der Gleitpartner, also einer hülsenförmigen Aufnahme oder Buchse, welche aus dem Gleitlagerverbundwerkstoff gebildet ist, und eines darin eingesetzten Wellenabschnitts, kommen kann. Beim Eintauchen in ein elektrisch leitfähiges Lackbad zur Lackbeschichtung einer Gleitlageranordnung wird nämlich typischerweise die hülsenförmige Aufnahme der Gleitlageranordnung, die auch schon in eine Öffnung eines Gehäuseteils oder eines Karosserieteils eingepresst sein kann, auf ein elektrisches Potential gebracht. Durch die weitestgehend elektrisch isolierende Ausbildung des Gleitschichtmaterials und damit der Gleitschicht kommt es nicht oder weniger zu Ablagerungen an oder auf einem üblicherweise metallischen Wellenabschnitt, der bereits in die hülsenförmige Aufnahme eingesetzt ist. Der Wellenabschnitt ist quasi elektrisch isoliert in der hülsenförmigen Aufnahme aufgenommen und bleibt daher weitgehend unbeschichtet. Dasselbe gilt für die Stirnseite des Gleitlagerverbundwerkstoffs bzw. der Gleitschicht und den zwischen der Gleitschicht und dem Wellenabschnitt gebildeten Spalt.

Wie erwähnt ist die Polymerbasis des Gleitschichtmaterials von PTFE gebildet; dies bedeutet nicht zwingend, dass kein weiteres Polymer, insbesondere Fluorpolymer in der Polymerbasis enthalten sein darf, sondern dass PTFE den Hauptbestandteil der Polymerbasis bildet in dem Sinn, dass die Polymerbasis zu wenigstens 85 Gew.-%, insbesondere zu wenigstens 90 Gew.-%, insbesondere zu wenigstens 95 Gew.-% und weiter vorzugsweise zu 100 Gew.-% von PTFE gebildet ist. In diesem Sinne könnte die Polymerbasis noch PVDF und/oder Polyamide (PA), PA 6.6 und/oder PA 4.6 und/oder Polyethylen (PE) und/oder PEEK umfassen.

Für die tribologische Performance des Gleitlagerverbundwerkstoffs sind weitere Füllstoffe außer Glasfasern und Wollastonit und/oder Flugasche nicht erforderlich, so dass das Gleitschichtmaterial aus der Polymerbasis und den genannten Füllstoffen Glasfasern und Wollastonit und/oder Flugasche bestehen kann. Es kann sich dennoch als vorteilhaft erweisen, wenn noch weitere Füllstoffe außer Glasfasern und Wollastonit und/oder Flugasche, insbesondere zu höchstens 4 Gew.-%, insbesondere zu höchstens 3 Gew.-%, insbesondere zu höchstens 2 Gew.-%, vorhanden sind. Die weiteren Füllstoffe außer Glasfasern und Wollastonit und/oder Flugasche können bezogen auf die Masse des Gleitschichtmaterials bis max 3,0 Gew.-%, insbesondere bis max 2,0 Gew.-% aus der Gruppe ZnS, WS₂, MoS₂, BaSO₄ und/oder bis max 2,0 Gew.-% eines Pigments, insbesondere Mischphasenoxidpigments, und/oder bis max 0,5 Gew.-% Graphit umfassen Das Gleitschichtmaterial kann auch aus diesen explizit genannten Füllstoffen und der Polymerbasis bestehen.

Es erweist sich weiter als vorteilhaft, wenn ein Verhältnis eines gewichtsprozentualen Anteils der Glasfasern zu einem gewichtsprozentualen Anteil des Wollastonits und/oder der Flugasche zwischen 1,2:1 und 1,8:1, insbesondere zwischen 1,3:1 und 1,7:1, insbesondere zwischen 1,4:1 und 1,6:1 liegt.

Es erweist sich weiter als vorteilhaft, wenn der gewichtsprozentuale Anteil der Glasfasern wenigstens 12 Gew.-%, insbesondere wenigstens 14 Gew.-% und insbesondere höchstens 23 Gew.-%, insbesondere höchstens 20 Gew.-%, insbesondere höchstens 18 Gew.-%, insbesondere höchstens 16 Gew.-% beträgt.

Weiter erweist es sich als vorteilhaft, wenn der gewichtsprozentuale Anteil des Wollastonits und/oder Flugasche wenigstens 7 Gew.-%, insbesondere wenigstens 8 Gew.-%, insbesondere wenigstens 9 Gew.-% und insbesondere höchstens 14 Gew.-%, insbesondere höchstens 12 Gew.-%, insbesondere höchstens 11 Gew.-% beträgt.

Es wird weiter vorgeschlagen, dass das Verhältnis des gewichtsprozentualen Anteils der Glasfasern zu dem gewichtsprozentualen Anteil des Wollastonits und/oder Flugasche wenigstens 1,2, insbesondere wenigstens 1,3, insbesondere wenigstens 1,4 und insbesondere höchstens 1,8, insbesondere höchstens 1,7, insbesondere höchstens 1,6 beträgt.

Wenn elektrisch leitende Füllstoffe, wie z.B. Graphit, als zusätzliche Füllstoffe enthalten sind, so ist darauf zu achten, dass dies die Leitfähigkeit des Gleitschichtmaterials und der Gleitschicht nicht zu sehr erhöht, so dass der eingangs angegebene elektrische Flächendurchtrittswiderstand von 10⁷ Ohm bei einer Probengröße von 10 mm mal 10 mm nicht unterschritten wird. Hier spielt natürlich die Menge eines zugegebenen elektrisch leitenden Füllstoffs und eine Schichtdicke der aus dem Gleitschichtmaterial gebildeten Gleitschicht eine Rolle. Im Ergebnis soll sichergestellt werden, dass eine hülsenförmige Aufnahme, die aus dem Gleitlagerverbundwerkstoff gebildet ist, den darin eingesteckten und dreh- oder schwenkbaren Wellenabschnitt im wesentlichen elektrisch isolierend aufnimmt und hält, so dass dort in einem elektrischen Lackbad keine Partikel abgeschieden werden.

Zur Anbindung der Gleitschicht an die Stützschicht kann zwischen Gleitschicht und Stützschicht eine Haftvermittlungsschicht auf Polymerbasis vorgesehen sein.

Hierdurch kann die Anhaftung der Schichten aneinander verbessert werden. Es wird weiter vorgeschlagen, dass die Polymerbasis vorzugsweise keine funktionalisierten Polymere umfasst, da hierdurch eine elektrisch isolierende Wirkung unterstützt werden kann. Die Haftvermittlungsschicht kann eine Dicke von vorzugsweise höchstens 100 µm, insbesondere von höchstens 75 µm, insbesondere von höchstens 50 µm aufweisen.

Weiter wird vorgeschlagen, dass eine Dicke der Gleitschicht wenigstens 50 µm, insbesondere wenigstens 100 µm, insbesondere wenigstens 120 µm, insbesondere wenigstens 150 µm und höchstens 500 µm, insbesondere höchstens 400 µm, insbesondere höchstens 300 µm, insbesondere höchstens 250 µm, insbesondere höchstens 200 µm beträgt.

Gegenstand der Erfindung ist aber auch eine Gleitlageranordnung umfassend eine hülsenförmige Aufnahme und einen Wellenabschnitt, welcher in der hülsenförmigen Aufnahme hin und her schwenkbar aufgenommen ist, so dass die hülsenförmige Aufnahme und der Wellenabschnitt eine Schwenklagerstelle bilden, wobei die hülsenförmige Aufnahme eine Gleitlagerbuchse aus einem auf Buchsenform gebrachten erfindungsgemäßen Gleitlagerverbundwerkstoff umfasst. Die hülsenförmige Aufnahme ist zur Ausbildung eines Festsitzes in eine Öffnung eines Gehäuseteils einsetzbar oder einpressbar.

Eine solche Gleitlageranordnung kann weiter dadurch gekennzeichnet und ausgebildet sein, dass der Wellenabschnitt aus einem elektrisch leitenden metallischen Material, insbesondere auf Aluminiumbasis, ausgebildet ist und dass die Gleitlageranordnung im montierten Zustand von Wellenabschnitt und hülsenförmiger Aufnahme mit Gleitlagerbuchse in ein elektrisch leitfähiges Lackbad zur Lackbeschichtung der Gleitlageranordnung eingebracht worden ist, wobei ein der hülsenförmigen Aufnahme zugeordneter Teil der Gleitlageranordnung auf ein elektrisches Potenzial gebracht worden ist. Es lässt sich so auf wirtschaftliche Weise eine Lackbeschichtung der Gleitlageranordnung auch im eingesetzten Zustand in eine Öffnung eines Gehäuseteils erreichen, wobei durch die elektrisch isolierte Aufnahme des Wellenabschnitts in der hülsenförmigen Aufnahme der Wellenabschnitt und der Lagerspalt unbeschichtet bleiben. Der Wellenabschnitt kann daher aus einem elektrisch leitenden metallischen Material, insbesondere auf Eisenbasis, zum Beispiel aus ungehärtetem Stahl, insbesondere mit einer Härte von weniger als 350 HB, bestehen.

Gegenstand der vorliegenden Erfindung ist auch ein Gehäuseteil nach Anspruch 13 sowie ein metallisches Karosserieteil nach Anspruch 14 und eine Schwenkhebelanordnung bei einem Kraftfahrzeug nach Anspruch 15. Auch für eine Buchse, Bundbuchse, kalottenförmige Lagerschale oder Kreisscheibe oder Kreisringscheibe aus einem erfindungsgemäßen Gleitlagerverbundwerkstoff wird Schutz in Anspruch genommen (Ansprüche 16, 17).

Ungeachtet von der vorausgehend als im Vordergrund stehend geschilderten Herstellung oder Fertigstellung einer Gleitlageranordnung durch Einbringen der Gleitlageranordnung in ein elektrisch leitfähiges Lackbad und damit unabhängig von einem elektrischen Widerstand des Gleitlagerverbundwerkstoffs wird Schutz in Anspruch genommen für einen Gleitlagerverbundwerkstoff mit den vorausgehend geschilderten Füllstoffen bzw. der Füllstoffkombination. Es wird also als selbstständig erfindungsbegründend angesehen ein Gleitlagerverbundwerkstoff mit einer metallischen Stützschicht, insbesondere aus Stahl, mit einer auf die Stützschicht entweder direkt oder unter Zwischenordnung einer Haftvermittlungsschicht aufgebrachten Gleitschicht aus einem Gleitschichtmaterial auf Polymerbasis mit Füllstoffen, wobei die Polymerbasis von PTFE gebildet ist, dadurch gekennzeichnet, dass die Füllstoffe bezogen auf die Masse des Gleitschichtmaterials aus 10 - 25 Gew.-% Glasfasern und in Summe 5 - 15 Gew.-% Wollastonit und/oder Flugasche und gegebenenfalls bis zu 5 Gew.-% weiteren Füllstoffen gebildet sind und dass ein Verhältnis eines gewichtsprozentualen Anteils der Glasfasern zu einem gewichtsprozentualen Anteil des Wollastonits und/oder Flugasche zwischen 1:1 und 2:1 liegt. Weiter wird dieser Gegenstand mit den Merkmalen der abhängigen Patentansprüche in beliebiger Kombination als selbständig erfindungsbegründend angesehen.

Die Anmelderin hatte sich nämlich die weitere Aufgabe gesetzt, einen Gleitlagerverbundwerkstoff anzugeben, welcher gute tribologische Eigenschaften im Zusammenwirken mit einem Wellenabschnitt als Gleitpartner in einer Gleitlageranordnung aufweist, und zwar mit einem Wellenabschnitt aus einem eher harten Material, wie zum Beispiel aus gehärtetem 100Cr6-Stahl, oder mit einem Wellenabschnitt aus einem eher weichen Material, wie zum Beispiel aus Reinaluminium (Al99%). Für beide Anwendungssituationen soll sich der Gleitlagerverbundwerkstoff als geeignet erweisen, d.h. er soll in typischen Belastungssituationen eine hinreichende Festigkeit und Verschleißfestigkeit und damit eine gute Gebrauchstauglichkeit aufweisen. Dabei hat die Anmelderin nicht lediglich den Verschleiß beim Gleitlagerverbundwerkstoff sondern auch bei dessen Gleitpartner in der Gebrauchssituation berücksichtigt und untersucht. Erfindungsgemäß wurde festgestellt, dass beides berücksichtigt werden sollte. Wenn vornehmlich die Verschleißfestigkeit verbessernde Füllstoffe in beträchtlichem Maße zugegeben werden so kann hierdurch zwar der Verschleiß am Gleitlagerverbundwerkstoff herabgesetzt werden; es zeigte sich aber, dass hierdurch selbst bei gehärteten Gleitpartnern erheblicher Verschleiß auftreten kann, was ebenfalls eine Verkürzung der Gebrauchsdauer der Gleitlageranordnung verursachen kann. Es wurde daher erfindungsgemäß der Gesamtverschleiß von Gleitlagerverbundwerkstoff und Gleitpartner untersucht, wobei als Gleitpartner eine Kugel aus einem relativ weicheren Material (Al99%) und aus einem relativ härteren Material (100Cr6-Stahl) verwendet wurde. - Die erfindungsgemäße Zusammensetzung des Gleitlagerverbundwerkstoffs mit den hauptsächlichen Füllstoffen in Form von Glasfasern und Wollastonit und/oder Flugasche in der vorausgehend angegebenen erfindungsgemäßen Zusammensetzung (gemäß Anspruch 1 und Weiterbildung gemäß den abhängigen Ansprüchen) stellt eine nicht ohne weiteres erwartbare Lösung zu dem hier in Rede stehenden Zielkonflikt dar. Man hatte nämlich ausgehend von einem Gleitschichtmaterial mit PTFE als Polymerbasis bislang das Hauptaugenmerk auf die Erhöhung der Verschleißfestigkeit durch Zugabe abrassiv wirkender Füllstoffe gelegt. Dass sich dies hingegen zumindest bei Gleitpartnern aus weicherem metallischen Material aber auch bei härteren Gleitpartner als problematisch erweist, wurde mit der vorliegenden Erfindung festgestellt. Die beanspruchte Zusammensetzung des Gleitlagerverbundwerkstoff löst dieses Problem.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der Erfindung.

In der Zeichnung zeigt:
- Figur 1: eine schematische Darstellung einer erfindungsgemäßen Gleitlageranordnung mit einer hülsenförmigen Aufnahme aus einem erfindungsgemäßen Gleitlager-verbundwerkstoff;
- Figur 2: eine schematische Messanordnung zur Bestimmung des elektrischen Widerstands; und
- Figuren 3-5: Messergebnisse.

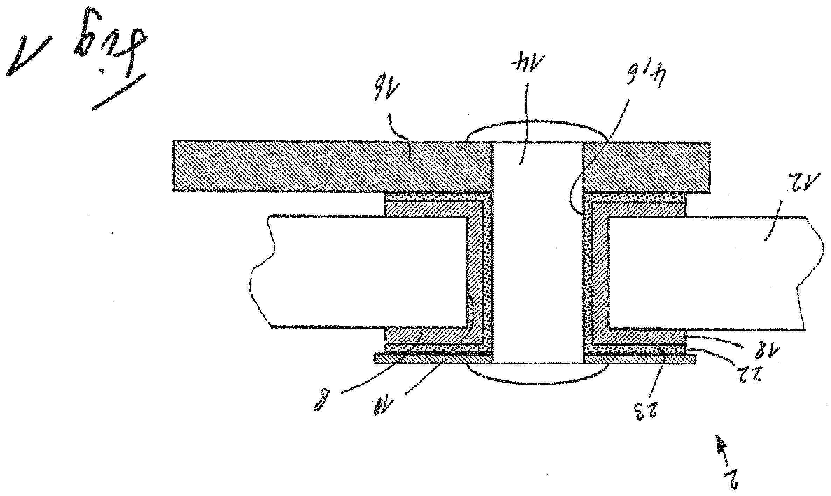

Figur 1 zeigt schematisch und nicht maßstabsgetreu eine insgesamt mit dem Bezugszeichen 2 bezeichnete Gleitlageranordnung umfassend eine hülsenförmige Aufnahme 4 in Form einer gerollten Buchse 6 aus einem erfindungsgemäßen Gleitlagerverbundwerkstoff 8, die in eine Öffnung 10 eines Gehäuse- oder Scharnierteils 12 eingesetzt ist, und einen Wellenabschnitt 14, der in der hülsenförmigen Aufnahme 4 hin und her schwenkbar aufgenommen ist. Der Wellenabschnitt 14 ist im beispielhaft dargestellten Fall mit einem weiteren Funktionsteil 16 verbunden.

Die Buchse 6 ist vorliegend beispielhaft als Bundbuchse ausgebildet. Sie umfasst eine metallische Stützschicht 18, insbesondere Stahl, und eine auf die Stützschicht 18 entweder direkt oder unter Zwischenordnung einer nicht dargestellten Haftvermittlungsschicht aufgebrachte Gleitschicht 20 aus einem Gleitschichtmaterial 22 auf Polymerbasis mit Füllstoffen 23. Das Gleitschichtmaterial 22 ist wie eingangs beschrieben und beansprucht ausgebildet. Eine beispielhafte bevorzugte Zusammensetzung umfasst oder ist gebildet aus PTFE als Polymerbasis (Rest), 15 Gew.-% Glasfasern, 10 Gew.-% Wollastonit, 0,6 Gew.-% Pigment und 0,2 Gew.-% Graphit.

Weiter wird vorgeschlagen, dass der elektrische Widerstand des Gleitlagerverbundwerkstoffs 8 wie eingangs dargestellt und beansprucht bemessen ist.

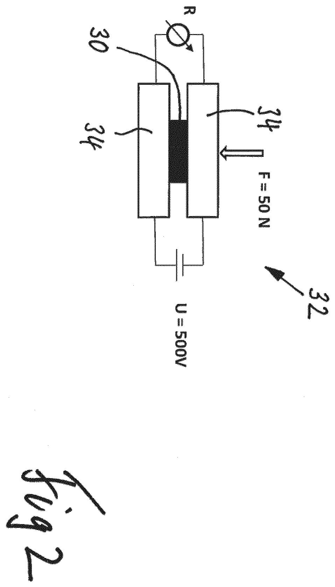

Die Messung des Widerstands erfolgt wie folgt. Aus einem Gleitlagerverbundwerkstoff 8 mit einer metallischen Stützschicht 18, einer optionalen Haftvermittlungsschicht und einer Gleitschicht 20 wird ein quadratischer Probenkörper 30 einer flächenhaften Erstreckung von 10,0 mm x 10,0 mm, also mit einer Fläche von 100 mm², ausgeschnitten oder ausgestanzt. Der Probenkörper 30 wird sodann in einer in Figur 2 schematisch dargestellten Messanordnung 32 zwischen zwei Platten 34 aus Kupfer als kontaktierende Elektroden gelegt. Dabei liegt der Probenkörper 30 mit seiner metallischen Stützschicht 18 gegen die eine Platte 34 und mit seiner Gleitschicht 20 gegen die andere Platte 34 flächenhaft an. Die Kupferplatten 34 werden mit einer Kraft von 50 N gegeneinander beaufschlagt, um eine innige Kontaktierung des Probenkörpers 30 zu erreichen. In diesem Zustand wird an die Kupferplatten 34 eine Gleichspannung von 500 V angelegt, und es wird der elektrische Widerstand zwischen den beiden Kupferplatten 34 gemessen. Dieser soll bei einem Probenkörper 30 der genannten Größe nach der vorliegenden Erfindung wenigstens 10⁷ Ohm betragen.

Es hat sich für die hier in Rede stehenden Anwendungen gezeigt, dass der Wellenabschnitt 14 in einer hülsenförmigen Aufnahme 4, welche aus einem Gleitlagerverbundwerkstoff 8 der erfindungsgemäßen Art gebildet ist, hinreichend elektrisch isoliert aufgenommen ist, so dass die Gleitlageranordnung 2 auch in einem elektrisch leitfähigen Lackbad beschichtet werden kann, ohne dass es zu störenden Ablagerungen an der Stirnseite des Wellenabschnitts 14 und des Gleitlagerverbundwerkstoffs 8 und an dem zwischen ihnen gebildeten Lagerspalt kommt, wenn ein der hülsenförmigen Aufnahme 4 zugeordneter Teil der Gleitlageranordnung 2 auf ein elektrisches Potenzial gebracht wird.

### Durchgeführte Untersuchungen

Es wurden Vergleichsmessungen unter Verwendung von Gleitlagerverbundwerkstoffen unterschiedlicher Zusammensetzung und Gleitpartnern unterschiedlichen Materials und Härte durchgeführt. Hierbei wurde ein Gleitlagerverbundwerkstoff mit einer metallischen Stützschicht aus Stahl und einer darauf aufgebrachten Gleitschicht aus einem Gleitschichtmaterial mit PTFE als Polymerbasis und den nachstehend angegebenen Füllstoffen in ebener Erstreckung in einer Messapparatur eingespannt. Als Gleitpartner oder Gegenläufer wurde eine Kugel mit 10,0 mm Durchmesser oder ein Stift mit einer halbkugelförmigen Endkappe dieser Abmessung eingesetzt. Es wurden zwei unterschiedliche Kugeln als Gleitpartner oder Gegenläufer eingesetzt, einmal aus gehärtetem und poliertem Stahl (100Cr6, mit einer Härte von 62 HRC) und das andere Mal aus Reinaluminium (Al99%).

Zwischen der ebenen Gleitschicht des Gleitlagerverbundwerkstoffs und der Kugel wurde ein zunächst quasi punktförmiger Kontakt unter einer Aufpresskraft von 20,0 N hergestellt. Zur Durchführung der Untersuchung werden nun Kugel und/oder Gleitlagerverbundwerkstoff in der Messapparatur relativ zueinander und immer in derselben entstehenden Spur der Gleitschicht linear oszillierend hin und her bewegt. Es wird eine Schwingweite von 3,0 mm (also +/- 1,5 mm) und eine Frequenz der oszillierenden Hin- und Herbewegung von 10 Hz ausgewählt. Die Untersuchung wurde bei Raumtemperatur und ohne Schmierstoffzugabe ausgeführt.

Es wurde dabei der Reibwertverlauf über der Zeit aufgezeichnet und im Anschluss die Verschleißtiefe bei dem kugelförmigen Reibpartner und die Verschleißtiefe als Tiefe der durch die Pendelbewegung mit geringer Schwingweite erzeugten Spur in der Gleitschicht des Gleitlagerverbundwerkstoffs durch mikroskopische Betrachtung ermittelt. Die Versuchszeit betrug bei Verwendung der Kugel aus gehärtetem Stahl 8 Stunden und bei Verwendung der Kugel aus Reinalu 2 Stunden.

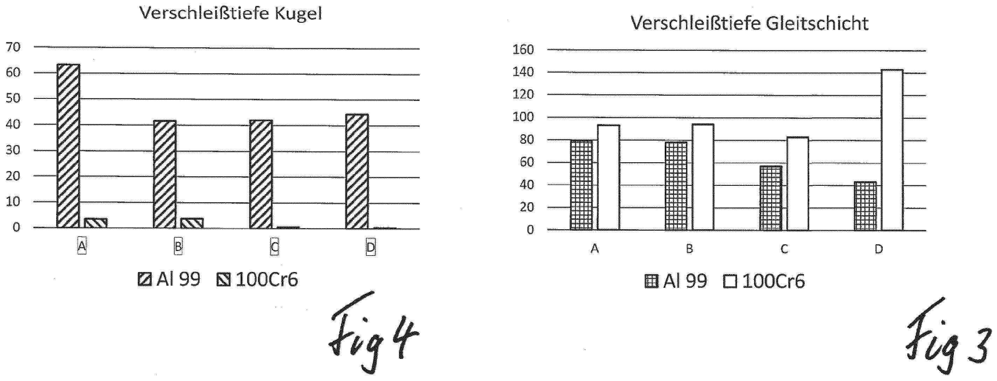

Die Figur 3 zeigt die ermittelte Veschleißtiefe oder Spurtiefe bei der Gleitschicht, und zwar links ermittelt mit einer Kugel aus ReinAlu (Al99) und rechts ermittelt mit einer Kugel aus gehärtetem Stahl (100Cr6), jeweils für die vier Füllstoffzusammensetzungen A, B, C, D des Gleitschichtmaterials.

Die Figur 4 zeigt die ermittelten Verschleißtiefen, bei der jeweiligen Kugel aus Reinaluminium (jeweils links, Al99) und bei der jeweiligen Kugel aus gehärtetem Stahl (jeweils rechts, 100Cr6), und zwar wiederum nach dem Pendelbeanspruchung bei den vier Zusammensetzungen A, B, C, D des Gleitschichtmaterials.

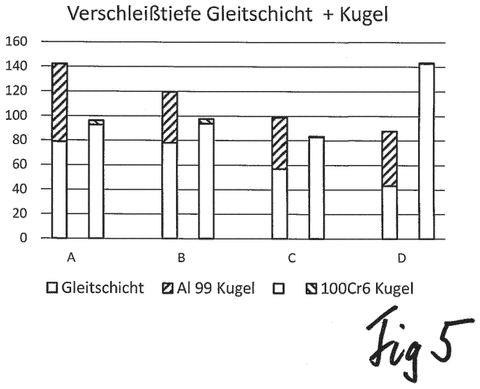

Schließlich zeigt die Figur 5 den Gesamtverschleiß von Gleitschicht und Kugel, wiederum für die Kugel aus Reinaluminium (jeweils links) und die Kugel aus gehärtetem Stahl (jeweils rechts). Man erkennt, dass sich die Zusammensetzung "C" des Gleitschichtmaterials der Gleitschicht als vorteilhaft erweist, da sich der Gesamtverschleiß sowohl im Zusammenwirken mit der Kugel aus Reinaluminium als auch mit der Kugel aus gehärtetem Stahl als zufriedenstellend zeigt. Ein Gleitlagerverbundwerkstoff mit einem Gleitschichtmaterial dieser Zusammensetzung C ist daher gleichermaßen für die Ausbildung einer Gleitlageranordnung mit einem eher harten, wie auch mit einem eher weichen Gleitpartner geeignet.

## Patentansprüche

1. Gleitlagerverbundwerkstoff (8) mit einer metallischen Stützschicht (18), insbesondere aus Stahl, mit einer auf die Stützschicht (18) entweder direkt oder unter Zwischenordnung einer Haftvermittlungsschicht aufgebrachten Gleitschicht (20) aus einem Gleitschichtmaterial (22) auf Polymerbasis mit Füllstoffen (23), wobei die Polymerbasis von PTFE gebildet ist, **dadurch gekennzeichnet, dass** die Füllstoffe (23) bezogen auf die Masse des Gleitschichtmaterials (22) aus 10 - 25 Gew.-% Glasfasern und in Summe 5 - 15 Gew.-% Wollastonit und/oder Flugasche und gegebenenfalls bis zu 5 Gew.-% weiteren Füllstoffen gebildet sind und dass ein Verhältnis eines gewichtsprozentualen Anteils der Glasfasern zu einem gewichtsprozentualen Anteil des Wollastonits und/oder Flugasche zwischen 1:1 und 2:1 liegt, und dass eine flächenhafte quadratische Probe von 10,0 mm mal 10,0 mm Kantenlänge des Gleitlagerverbundwerkstoffs einen elektrischen Widerstand gemessen orthogonal zu seiner flächenhaften Erstreckung von wenigstens 10⁷ Ohm aufweist.

2. Gleitlagerverbundwerkstoff (8) nach Anspruch 1,
**dadurch gekennzeichnet, dass** dass die weiteren Füllstoffe außer Glasfasern und Wollastonit und/oder Flugasche bezogen auf die Masse des Gleitschichtmaterials (22) bis max 3,0 Gew.-%, insbesondere bis max 2,0 Gew.-% aus der Gruppe ZnS, WS₂, MoS₂, BaSO₄, und/oder bis max 2,0 Gew.-% eines Pigments und/oder bis max 0,5 Gew.-% Graphit umfassen.

3. Gleitlagerverbundwerkstoff (8) nach Anspruch 1 oder 2, **dadurch gekennzeichnet, dass** ein Verhältnis eines gewichtsprozentualen Anteils der Glasfasern zu einem gewichtsprozentualen Anteil des Wollastonits und/oder Flugasche zwischen 1,2:1 und 1,8:1, insbesondere zwischen 1,3:1 und 1,7:1, insbesondere zwischen 1,4:1 und 1,6:1 liegt.

4. Gleitlagerverbundwerkstoff (8) nach Anspruch 1, 2 oder 3, **dadurch gekennzeichnet, dass** das Wollastonit nadelförmiges Wollastonit umfasst oder aus nadelförmigem Wollastonit besteht.

5. Gleitlagerverbundwerkstoff (8) nach einem oder mehreren der vorstehenden Ansprüche, **dadurch gekennzeichnet, dass** der gewichtsprozentuale Anteil der Glasfasern wenigstens 12 Gew.-%, insbesondere wenigstens 14 Gew.-% und insbesondere höchstens 23 Gew.-%, insbesondere höchstens 20 Gew.-%, insbesondere höchstens 18 Gew.-%, insbesondere höchstens 16 Gew.-% beträgt.

6. Gleitlagerverbundwerkstoff (8) nach einem oder mehreren der vorstehenden Ansprüche, **dadurch gekennzeichnet, dass** der gewichtsprozentuale Anteil des Wollastonits und/oder Flugasche wenigstens 7 Gew.-%, insbesondere wenigstens 8 Gew.-%, insbesondere wenigstens 9 Gew.-% und insbesondere höchstens 14 Gew.-%, insbesondere höchstens 12 Gew.-%, insbesondere höchstens 11 Gew.-% beträgt.

7. Gleitlagerverbundwerkstoff (8) nach einem oder mehreren der vorstehenden Ansprüche, **dadurch gekennzeichnet, dass** das Verhältnis des gewichtsprozentualen Anteils der Glasfasern zu dem gewichtsprozentualen Anteil des Wollastonits und/oder Flugasche wenigstens 1,2, insbesondere wenigstens 1,3, insbesondere wenigstens 1,4 und insbesondere höchstens 1,8, insbesondere höchstens 1,7, insbesondere höchstens 1,6 beträgt.

8. Gleitlagerverbundwerkstoff (8) nach einem oder mehreren der vorstehenden Ansprüche, **gekennzeichnet durch** eine Haftvermittlungschicht auf Polymerbasis zwischen Gleitschicht (20) und Stützschicht (18), wobei die Polymerbasis vorzugsweise keine funktionalisierten Polymere umfasst und eine Dicke von vorzugsweise höchstens 100 µm, insbesondere von höchstens 75 µm, insbesondere von höchstens 50 µm aufweist.

9. Gleitlagerverbundwerkstoff (8) nach einem oder mehreren der vorstehenden Ansprüche, **dadurch gekennzeichnet, dass** eine Dicke der Gleitschicht (20) wenigstens 50 µm, insbesondere wenigstens 100 µm, insbesondere wenigstens 120 µm, insbesondere wenigstens 150 µm und höchstens 500 µm, insbesondere höchstens 400 µm, insbesondere höchstens 300 µm, insbesondere höchstens 250 µm, insbesondere höchstens 200 µm beträgt.

10. Gleitlageranordnung (2) umfassend eine hülsenförmige Aufnahme (4) und einen Wellenabschnitt (14), welcher in der hülsenförmigen Aufnahme (4) hin und her schwenkbar aufgenommen ist, so dass die hülsenförmige Aufnahme (4) und der Wellenabschnitt (14) eine Schwenklagerstelle bilden, wobei die hülsenförmige Aufnahme (4) eine Gleitlagerbuchse (6) aus einem auf Buchsenform gebrachten Gleitlagerverbundwerkstoff (8) nach einem oder mehreren der vorstehenden Ansprüche umfasst.

11. Gleitlageranordnung (2) nach Anspruch 10, **dadurch gekennzeichnet, dass** der Wellenabschnitt (14) aus einem elektrisch leitenden metallischen Material, insbesondere auf Eisenbasis oder Aluminiumbasis, ausgebildet ist und dass die Gleitlageranordnung (2) im montierten Zustand von Wellenabschnitt (14) und hülsenförmiger Aufnahme (4) mit Gleitlagerbuchse (6) in ein elektrisch leitfähiges Lackbad zur Lackbeschichtung der Gleitlageranordnung (2) eingebracht worden ist, wobei ein der hülsenförmigen Aufnahme (4) zugeordneter Teil der Gleitlageranordnung (2) auf ein elektrisches Potenzial gebracht worden ist.

12. Gleitlageranordnung (2) nach Anspruch 10 oder 11, **dadurch gekennzeichnet, dass** der Wellenabschnitt (14) aus einem elektrisch leitenden metallischen Material, insbesondere auf Eisenbasis, mit einer Härte von weniger als 350 HB gebildet ist.

13. Gehäuse- oder Maschinenteil (12) mit einer Öffnung (10) zur Aufnahme einer Gleitlageranordnung (2) nach Anspruch 10, 11 oder 12, wobei die Gleitlagerbuchse (6) zur Bildung eines Festsitzes in die Öffnung (10) eingepresst ist.

14. Metallisches Karosserieteil eines Kraftfahrzeugs mit einer Öffnung (10) zur Aufnahme einer Gleitlageranordnung (2) nach Anspruch 10, 11 oder 12, wobei die Gleitlagerbuchse (6) zur Bildung eines Festsitzes in die Öffnung (10) eingepresst ist, wobei das Karosserieteil mitsamt der Gleitlageranordnung (2) in ein elektrisch leitfähiges Lackbad zur Lackbeschichtung des Karosserieteils und der Gleitlageranordnung (2) eingebracht worden ist, wobei das Karosserieteil und ein der hülsenförmigen Aufnahme (4) zugeordneter Teil der Gleitlageranordnung (2) auf ein elektrisches Potenzial gebracht worden ist.

15. Schwenkhebelanordnung bei einem Kraftfahrzeug umfassend eine Gleitlageranordnung (2) nach Anspruch 10, 11 oder 12.

16. Buchse (6), insbesondere Bundbuchse, oder Kreisscheibe oder Kreisringscheibe, jeweils hergestellt durch einen Rollbiegevorgang und/oder durch einen Stanzvorgang aus einem Gleitlagerverbundwerkstoff (8) nach einem oder mehreren der vorstehenden Ansprüche 1-9 zur Verwendung bei einer Gleitlageranordnung nach Anspruch 10, 11 oder 12.

17. Buchse (6), insbesondere Bundbuchse, nach Anspruch 16 mit einem lichten Innendurchmesser von wenigstens 3 mm, insbesondere von wenigstens 5 mm, besondere von wenigstens 10 mm, insbesondere von wenigstens 12 mm, insbesondere von wenigstens 15 mm und insbesondere von höchstens 40 mm, insbesondere von höchstens 25 mm, insbesondere von höchstens 22 mm, insbesondere höchstens 20 mm, und mit einer Länge von wenigstens 2 mm, insbesondere von wenigstens 3 mm, insbesondere von wenigstens 4 mm und insbesondere von höchstens 20 mm, insbesondere von höchstens 15 mm, insbesondere von höchstens 12 mm, insbesondere von höchstens 10 mm.

## Claims

1. Plain bearing composite material (8) comprising a metal support layer (18), in particular made of steel, and comprising a sliding layer (20) which is applied to the support layer (18), either directly or with the interposition of an adhesion-promoting layer, and is made of a polymer-based sliding layer material (22) with fillers (23), the polymer base being formed from PTFE, **characterized in that** the fillers (23) are formed, relative to the mass of the sliding layer material (22), from 10-25 wt.% glass fibers and a total of 5-15 wt.% wollastonite and/or fly ash, and optionally up to 5 wt.% additional fillers, and **in that** a ratio of a weight percentage of the glass fibers to a weight percentage of the wollastonite and/or fly ash is between 1:1 and 2:1, and **in that** a planar square sample of 10.0 mm by 10.0 mm of edge length of the plain bearing composite material has an electrical resistance, measured orthogonally to the planar extent of said composite material, of at least 10⁷ Ohm.

2. Plain bearing composite material (8) according to claim 1, **characterized in that** that the additional fillers, apart from glass fibers and wollastonite and/or fly ash, comprise, based on the mass of the sliding layer material (22), up to a maximum of 3.0 wt.%, in particular up to a maximum of 2.0 wt.%, from the group consisting of ZnS, WS₂, MoS₂, BaSO₄, and/or up to a maximum of 2.0 wt.% of a pigment and/or up to a maximum of 0.5 wt.% graphite.

3. Plain bearing composite material (8) according to claim 1 or 2, **characterized in that** a ratio of a weight percentage of the glass fibers to a weight percentage of the wollastonite and/or fly ash is between 1.2:1 and 1.8:1, in particular between 1.3:1 and 1.7:1, in particular between 1.4:1 and 1.6:1.

4. Plain bearing composite material (8) according to claim 1, 2 or 3, **characterized in that** the wollastonite comprises or consists of acicular wollastonite.

5. Plain bearing composite material (8) according to one or more of the preceding claims, **characterized in that** the weight percentage of glass fibers is at least 12 wt.%, in particular at least 14 wt.%, and in particular at most 23 wt.%, in particular at most 20 wt.%, in particular at most 18 wt.%, in particular at most 16 wt.%.

6. Plain bearing composite material (8) according to one or more of the preceding claims, **characterized in that** the weight percentage of the wollastonite and/or fly ash is at least 7 wt.%, in particular at least 8 wt.%, in particular at least 9 wt.% and in particular at most 14 wt.%, in particular at most 12 wt.%, in particular at most 11 wt.%.

7. Plain bearing composite material (8) according to one or more of the preceding claims, **characterized in that** the ratio of the weight percentage of glass fibers to the weight percentage of wollastonite and/or fly ash is at least 1.2, in particular at least 1.3, in particular at least 1.4 and in particular at most 1.8, in particular at most 1.7, in particular at most 1.6.

8. Plain bearing composite material (8) according to one or more of the preceding claims, **characterized by** a polymer-based adhesion-promoting layer between the sliding layer (20) and the support layer (18), the polymer base preferably not comprising any functionalized polymers and having a thickness of preferably at most 100 µm, in particular at most 75 µm, in particular at most 50 µm.

9. Plain bearing composite material (8) according to one or more of the preceding claims, **characterized in that** a thickness of the sliding layer (20) is at least 50 µm, in particular at least 100 µm, in particular at least 120 µm, in particular at least 150 µm and at most 500 µm, in particular at most 400 µm, in particular at most 300 µm, in particular at most 250 µm, in particular at most 200 µm.

10. Plain bearing arrangement (2) comprising a sleeve-shaped receptacle (4) and a shaft portion (14) which is received in the sleeve-shaped receptacle (4) so as to be pivotable back and forth, so that the sleeve-shaped receptacle (4) and the shaft portion (14) form a pivot bearing point, wherein the sleeve-shaped receptacle (4) comprises a plain bearing bushing (6) made of a plain bearing composite material (8) according to one or more of the preceding claims brought into the shape of a bushing.

11. Plain bearing arrangement (2) according to claim 10, **characterized in that** the shaft portion (14) is formed from an electrically conductive metal material, in particular an iron-based or aluminum-based material, and **in that**, in the mounted state of the shaft portion (14) and of the sleeve-shaped receptacle (4) comprising a plain bearing bushing (6), the plain bearing arrangement (2) has been introduced into an electrically conductive paint bath for paint coating the plain bearing arrangement (2), with a portion of the plain bearing arrangement (2) associated with the sleeve-shaped receptacle (4) having been brought to an electrical potential.

12. Plain bearing arrangement (2) according to claim 10 or 11, **characterized in that** the shaft portion (14) is formed from an electrically conductive metal material, in particular an iron-based material, which has a hardness of less than 350 HB.

13. Housing part or machine part (12) comprising an opening (10) for receiving a plain bearing arrangement (2) according to claim 10, 11 or 12, wherein the plain bearing bushing (6) is pressed into the opening (10) to form a press fit.

14. Metal body part of a motor vehicle comprising an opening (10) for receiving a plain bearing arrangement (2) according to claim 10, 11 or 12, wherein the plain bearing bushing (6) is pressed into the opening (10) to form a press fit, wherein the body part, together with the plain bearing arrangement (2), has been introduced into an electrically conductive paint bath for paint coating the body part and the plain bearing arrangement (2), wherein the body part and a portion of the plain bearing arrangement (2) associated with the sleeve-shaped receptacle (4) have been brought to an electrical potential.

15. Pivot lever arrangement in a motor vehicle comprising a plain bearing arrangement (2) according to claim 10, 11 or 12.

16. Bushing (6), in particular a flanged bushing, or a disk or annular disk, in each case produced by a rollbending process and/or by a punching process from a plain bearing composite material (8) according to one or more of the preceding claims 1-9 for use in a plain bearing arrangement according to claim 10, 11 or 12.

17. Bushing (6), in particular a flanged bushing, according to claim 16, having a clear inner diameter of at least 3 mm, in particular of at least 5 mm, in particular of at least 10 mm, in particular of at least 12 mm, in particular of at least 15 mm and in particular of at most 40 mm, in particular of at most 25 mm, in particular of at most 22 mm, in particular of at most 20 mm, and having a length of at least 2 mm, in particular of at least 3 mm, in particular of at least 4 mm and in particular of at most 20 mm, in particular of at most 15 mm, in particular of at most 12 mm, in particular of at most 10 mm.

## Revendications

1. Matériau composite pour palier lisse (8) comportant une couche d'appui (18) métallique, en particulier en acier, comportant une couche lisse (20) appliquée sur la couche d'appui (18) soit directement, soit avec interposition d'une couche d'adhérence, laquelle couche lisse est en un matériau de couche lisse (22) à base de polymère comportant des matières de charge (23), dans lequel la base de polymère est formée de PTFE, **caractérisé en ce que** les matières de charge (23), par rapport à la masse du matériau de couche lisse (22), sont constituées de 10 à 25 % en poids de fibres de verre et, au total, de 5 à 15 % en poids de wollastonite et/ou de cendres volantes et éventuellement jusqu'à 5 % en poids d'autres matières de charge, et **en ce qu'**un rapport entre une proportion en pourcentage en poids des fibres de verre et une proportion en pourcentage en poids de wollastonite et/ou de cendres volantes est compris entre 1:1 et 2:1, et **en ce qu'**un échantillon carré extensif de 10,0 mm par 10,0 mm de longueur de bord du matériau composite pour palier lisse présente une résistance électrique mesurée orthogonalement à son extension extensive d'au moins 10⁷ ohms.

2. Matériau composite pour palier lisse (8) selon la revendication 1, **caractérisé en ce que** les autres matières de charge, outre les fibres de verre et la wollastonite et/ou les cendres volantes, sont constituées de, par rapport à la masse du matériau de couche lisse (22), jusqu'à 3,0 % en poids au maximum, en particulier jusqu'à 2,0 % en poids au maximum, du groupe ZnS, WS₂, MoS₂, BaSO₄, et/ou jusqu'à 2,0 % en poids au maximum d'un pigment et/ou jusqu'à 0,5 % en poids au maximum de graphite.

3. Matériau composite pour palier lisse (8) selon la revendication 1 ou 2, **caractérisé en ce qu'**un rapport entre une proportion en pourcentage en poids de fibres de verre et une proportion en pourcentage en poids de wollastonite et/ou de cendres volantes est compris entre 1,2:1 et 1,8:1, en particulier entre 1,3:1 et 1,7:1, en particulier entre 1,4:1 et 1,6:1.

4. Matériau composite pour palier lisse (8) selon la revendication 1, 2 ou 3, **caractérisé en ce que** la wollastonite comprend de la wollastonite aciculaire ou est constituée de wollastonite aciculaire.

5. Matériau composite pour palier lisse (8) selon l'une ou plusieurs des revendications précédentes, **caractérisé en ce que** la proportion en pourcentage en poids des fibres de verre est d'au moins 12 % en poids, en particulier d'au moins 14 % en poids et en particulier d'au plus 23 % en poids, en particulier d'au plus 20 % en poids, en particulier d'au plus 18 % en poids, en particulier d'au plus 16 % en poids.

6. Matériau composite pour palier lisse (8) selon l'une ou plusieurs des revendications précédentes, **caractérisé en ce que** la proportion en pourcentage en poids de la wollastonite et/ou des cendres volantes est d'au moins 7 % en poids, en particulier d'au moins 8 % en poids, en particulier d'au moins 9 % en poids et en particulier d'au plus 14 % en poids, en particulier d'au plus 12 % en poids, en particulier d'au plus 11 % en poids.

7. Matériau composite pour palier lisse (8) selon l'une ou plusieurs des revendications précédentes, **caractérisé en ce que** le rapport entre la proportion en pourcentage en poids des fibres de verre et la proportion en pourcentage en poids de la wollastonite et/ou des cendres volantes est d'au moins 1,2, en particulier d'au moins 1,3, en particulier d'au moins 1,4 et en particulier d'au plus 1,8, en particulier d'au plus 1,7, en particulier d'au plus 1,6.

8. Matériau composite pour palier lisse (8) selon l'une ou plusieurs des revendications précédentes, **caractérisé par** une couche d'adhérence à base de polymère entre la couche lisse (20) et la couche d'appui (18), dans lequel la base de polymère ne comprend de préférence pas de polymères fonctionnalisés et présente une épaisseur de préférence d'au plus 100 µm, en particulier d'au plus 75 µm, en particulier d'au plus 50 µm.

9. Matériau composite pour palier lisse (8) selon l'une ou plusieurs des revendications précédentes, **caractérisé en ce qu'**une épaisseur de la couche lisse (20) est d'au moins 50 µm, en particulier d'au moins 100 µm, en particulier d'au moins 120 µm, en particulier d'au moins 150 µm et d'au plus 500 µm, en particulier d'au plus 400 µm, en particulier d'au plus 300 µm, en particulier d'au plus 250 µm, en particulier d'au plus 200 µm.

10. Ensemble formant palier lisse (2) comprenant un logement en forme de manchon (4) et une section formant arbre (14) qui est reçue de manière pivotante en va-et-vient dans le logement en forme de manchon (4) de sorte que le logement en forme de manchon (4) et la section formant arbre (14) forment un emplacement pour palier pivotant, dans lequel le logement en forme de manchon (4) comprend un coussinet de palier lisse (6) en un matériau composite pour palier lisse (8) selon l'une ou plusieurs des revendications précédentes et amené en forme de douille.

11. Ensemble formant palier lisse (2) selon la revendication 10, **caractérisé en ce que** la section formant arbre (14) est réalisée en un matériau métallique électroconducteur, en particulier à base de fer ou à base d'aluminium, et **en ce que** l'ensemble formant palier lisse (2), à l'état monté de la section formant arbre (14) et du logement en forme de manchon (4) comportant le coussinet de palier lisse (6), a été introduit dans un bain de peinture électroconducteur pour le revêtement de peinture de l'ensemble formant palier lisse (2), dans lequel une partie de l'ensemble formant palier lisse (2) associée au logement en forme de manchon (4) a atteint un potentiel électrique.

12. Ensemble formant palier lisse (2) selon la revendication 10 ou 11, **caractérisé en ce que** la section formant arbre (14) est formée d'un matériau métallique électroconducteur, en particulier à base de fer, comportant une dureté inférieure à 350 HB.

13. Partie de boîtier ou de machine (12) comportant une ouverture (10) pour la réception d'un ensemble formant palier lisse (2) selon la revendication 10, 11 ou 12, dans laquelle le coussinet de palier lisse (6) est pressé dans l'ouverture (10) pour la formation d'un ajustement serré.

14. Partie de carrosserie métallique d'un véhicule automobile comportant une ouverture (10) pour la réception d'un ensemble formant palier lisse (2) selon la revendication 10, 11 ou 12, dans laquelle le coussinet de palier lisse (6) est pressé dans l'ouverture (10) pour la formation d'un ajustement serré, dans laquelle la partie de carrosserie avec l'ensemble formant palier lisse (2) a été introduite dans un bain de peinture électroconducteur pour le revêtement de peinture de la partie de carrosserie et de l'ensemble formant palier lisse (2), dans laquelle la partie de carrosserie et une partie de l'ensemble formant palier lisse (2) associée au logement en forme de manchon (4) ont atteint un potentiel électrique.

15. Ensemble formant levier pivotant dans un véhicule automobile comprenant un ensemble formant palier lisse (2) selon la revendication 10, 11 ou 12.

16. Coussinet (6), en particulier douille à collet, ou disque circulaire ou disque annulaire circulaire, respectivement fabriqués par un processus de roulage et/ou par un processus de poinçonnage à partir d'un matériau composite pour palier lisse (8) selon l'une ou plusieurs des revendications précédentes 1 à 9, pour l'utilisation dans un ensemble formant palier lisse selon la revendication 10, 11 ou 12.

17. Coussinet (6), en particulier douille à collet, selon la revendication 16 comportant un diamètre intérieur libre d'au moins 3 mm, en particulier d'au moins 5 mm, en particulier d'au moins 10 mm, en particulier d'au moins 12 mm, en particulier d'au moins 15 mm et en particulier d'au plus 40 mm, en particulier d'au plus 25 mm, en particulier d'au plus 22 mm, en particulier d'au plus 20 mm, et comportant une longueur d'au moins 2 mm, en particulier d'au moins 3 mm, en particulier d'au moins 4 mm et en particulier d'au plus 20 mm, en particulier d'au plus 15 mm, en particulier d'au plus 12 mm, en particulier d'au plus 10 mm.
